Europäisches Patentamt

European Patent Office

Office européen des brevets

(19)

(11) EP 0 843 481 A1

(12) EUROPEAN PATENT APPLICATION
published in accordance with Art. 158(3) EPC

(43) Date of publication:
20.05.1998 Bulletin 1998/21

(51) Int. Cl.⁶: H04N 7/24

(21) Application number: 96925974.6

(22) Date of filing: 02.08.1996

(86) International application number:
PCT/JP96/02175

(87) International publication number:
WO 97/06641 (20.02.1997 Gazette 1997/09)

(84) Designated Contracting States:
DE FR GB IT

(30) Priority: 03.08.1995 JP 219751/95

(71) Applicant:
MATSUSHITA ELECTRIC INDUSTRIAL CO., LTD.
Kadoma-shi, Osaka-fu, 571 (JP)

(72) Inventors:
• KADONO, Shinya
  Hyogo 651-11 (JP)
• TSUDA, Kenjiro
  Osaka 573 (JP)

(74) Representative:
Kügele, Bernhard et al
NOVAPAT INTERNATIONAL SA,
9, Rue du Valais
1202 Genève (CH)

(54) IMAGE ENCODER, IMAGE DECODER, IMAGE DECODING METHOD, AND IMAGE TRANSMITTING SYSTEM

(57) An effective picture element area of a pixel signal at every block is detected at effective pixel detection means, two dimensional orthogonal transformation is done for a minimum unit including all effective pixels at two dimensional orthogonal transform means, a distribution of the DC component which the corresponding block can take from the effective pixels is calculated and the DC component is normalized so that the distributions of the DC components become the same among blocks having different number of pixels at DC normalization coefficient calculation means, and the orthogonal transform signal is supplied to quantization means and quantization is done based on a weighting coefficient and a quantization parameter.

FIG. 1

EP 0 843 481 A1

**Description**

TECHNICAL FIELD

The present invention relates to a picture signal coding apparatus for reducing a data quantity of a picture signal and coding it, aiming to reduce a capacity necessary for recording and a transmission rate necessary for transmission at recording or transmission of the picture signal and a picture signal decoding apparatus for correctly decoding the coded picture signal.

TECHNICAL BACKGROUND

As a coding method used in a picture signal coding apparatus for a natural picture, it is well known that JPEG (Joint Photographic coding Experts Group) and MPEG (Moving Picture Experts Group) are good method in high effective coding. In each method, an input picture signal is divided into rectangular blocks made of a plurality of pixels, then the picture signal at every block is orthogonally transformed (discrete cosine transform) by orthogonal transform means, and after being quantized through specified quantization steps at quantization means, the picture signal is variable length coded at variable length coding means and is output as a coded picture signal.

On the other hand, as a picture signal, there is a synthesized picture signal made by artificially synthesizing a plurality of pictures other than a usual picture signal composing a picture. In such a synthesized picture, if a picture signal before synthesis is coded at a picture coding apparatus, the picture signal before synthesis and the picture signal after synthesis are arbitrarily selected and are decoded at a picture decoding apparatus and a picture can be reproduced and is available for a picture data base and the like. For a synthesized picture, a signal called transparency information (shape information) expressing a ratio of picture synthesis is necessary other than a color signal composed of a luminance signal and color difference signals. If the transparency information is 100 %, the picture signal implies to be transparent and there is no need of coding. Therefore, if a pixel value is coded only for an opaque picture element which the transparency information is not 100 %, an efficient coding can be done. Because a gather of the opaque pixels is generally not rectangular shape, it is impossible to use discrete cosine transform used in JPEG and MPEG as it is. As for a practical method of shape adaptive orthogonal transformation which can be efficiently coded even in any shape other than rectangle, investigation results are reported in Coding of Arbitrarily Shaped Image Segments based on a generalized Orthogonal Transform", Gilge et.al, Signal Processing: Image Communication vol. 1 1989, etc..

In "Method of Picture Signal Coding" of Japanese Application Number 6-271542, a procedure which can efficiently coded by inserting a pixel value even for shapes other than rectangle is proposed.

However, in a picture signal coding apparatus mentioned above, optimizing of quantization of orthogonal transform for a block other than rectangular shape having the same size is not investigated and there is a room to improve from a view point of coding efficiency.

In Gilge's procedure, a complex calculation is necessary for deriving a basic function of an orthogonal transform and it is difficult to realize. In a coding procedure inserting a pixel value with a simple calculation, however, there is a room to realize improving a picture quality more by improving an inserting method.

DISCLOSURE OF THE INVENTION

The present invention aims to present a picture signal coding apparatus, a picture signal decoding apparatus, a picture signal coding method and a picture signal decoding method, in which quantization means to quantize after the blocks having different sizes are orthogonally transformed is optimized from a view point of bit rate.

A first invention relates to a picture signal coding apparatus, being supplied with an input picture signal and an effective pixel indication signal indicating a partial picture to be coded in the input picture signal and for coding the partial picture of a digital picture signal at every block, and is characterized by including:

orthogonal transform base generation means for generating an orthogonal transform base of the input picture signal by the effective pixel indication signal;
orthogonal transform means for orthogonally transforming the input picture signal by the orthogonal transform base generated at the orthogonal transform base generation means;
DC normalization coefficient calculation means for deriving a DC normalization coefficient for normalizing a DC component of a transformed output signal of the orthogonal transform means from the effective pixel indication signal; and
quantization means for multiplying a quantization step by the DC normalization coefficient obtained at the DC normalization coefficient calculation means for a DC component in an orthogonal transform signal supplied from the orthogonal transform means and quantizing the orthogonal transform signal by a standard quantization step for a non DC component in the orthogonal transform signal supplied from the orthogonal transform means.

A second invention relates to a picture signal decoding apparatus, being supplied with a coded signal by a picture signal coding apparatus controlling a quantization step at quantizing a DC component which is a result of an input picture signal orthogonally transformed by an effective pixel indication signal indicating a partial picture to be coded and the effective pixel indication signal and for decoding the coded signal, and is characterized by including:

decoding means for decoding the coded signal and outputting a decoded signal;
DC normalization coefficient calculation means for deriving a DC normalization coefficient for normalizing a DC component in the decoded signal from the decoding means out of the effective pixel indication signal;
dequantization means for dequantizing the decoded signal by a quantization step multiplied by a DC normalization coefficient obtained at the DC normalization coefficient calculation means for a DC component in the decoded signal obtained at the decoding means ,and dequantizing the decoded signal by a standard quantization step for a non DC component in the decoded signal obtained at the decoding means;
orthogonal transform base generation means for generating an orthogonal transform base of an output signal of the dequantization means by the effective pixel indication signal; and
orthogonal transform means for outputting a picture decoding signal after orthogonally transforming an output signal of the dequantization means by the orthogonal transform base.

A third invention relates to a picture signal coding apparatus, being supplied with an input picture signal, an effective pixel indication signal indicating a partial picture to be coded in the input picture signal and a DC component of a reference block and for coding the partial picture in a digital picture signal at every block and differential coding a DC block at every block, and is characterized by including:

orthogonal transform base generation means for generating an orthogonal transform base of the input picture signal by the effective pixel indication signal;
orthogonal transform means for orthogonally transforming the input picture signal by the orthogonal transform base;
DC normalization coefficient calculation means for deriving a DC normalization coefficient for normalizing a DC component of a transformed output signal of the orthogonal transform means out of the effective pixel indication signal;
DC prediction coding means for multiplying the DC component of a reference block by the DC normalization coefficient calculated at the DC normalization coefficient calculation means and outputting a DC differential component which is a difference between the obtained DC component and the DC component of the reference block; and
quantization means for quantizing a DC differential component in the output of the DC prediction coding means and an AC component in the output signal of the orthogonal transform means.

A fourth invention relates to a picture signal decoding apparatus, being supplied with a coded signal coded at a picture signal coding apparatus which a DC component orthogonally transformed from an input picture signal compensates a DC component of a reference block by using an effective pixel indication signal indicating a partial picture to be coded, the effective pixel indication signal and a DC component of the reference block and for decoding the coded signal, and is characterized by including:

decoding means for decoding the coded signal and outputting the decoded signal;
dequantization means for dequantizing the decoded signal of the decoding means;
orthogonal transform base generation means for generating an orthogonal transform base of the output signal of the dequantization means by the effective pixel indication signal;
DC normalization coefficient calculation means for deriving a DC normalization coefficient for normalizing a DC component in the decoded signal output from the decoding means out of the effective pixel indication signal;
DC prediction decoding means for multiplying a DC component of a reference block by the DC normalization coefficient, adding it to a DC differential component of the output of the dequantization means and making the sum a DC component; and
orthogonal transform means for orthogonally transforming the DC component output from the DC decoding means by the orthogonal transform base and an AC component output from the dequantization means and outputting a picture decoded signal.

A fifth invention is characterized by that the DC normalization coefficient calculation means in the first and third inventions makes the root of the ratio of the number of pixels of a partial picture to be coded to the total number of pixels of the block a DC normalization coefficient.

A sixth invention is characterized by that the DC normalization coefficient calculation means in the second and fourth inventions makes the root of the ratio of the number of pixels of a partial picture to be coded to the total number of picture elements of the block a DC normalization coefficient.

A seventh invention relates to a picture signal coding apparatus, being supplied with an input picture signal and an effective pixel indication signal indicating a partial picture to be coded of the input picture signal and for coding a partial picture of a digital picture signal at every block, and is characterized by including:

orthogonal transform base generation means for generating an orthogonal transform base of the input picture signal by the effective pixel indication signal;
orthogonal transform means for orthogonally transforming the input picture signal by the orthogonal transform base generated at the orthogonal transform base generation means;
AC normalization coefficient calculation means for deriving an AC normalization coefficient for normalizing an AC component of the transformed output signal of the orthogonal transform means from the effective pixel indication signal; and
quantization means for multiplying a quantization step by the AC normalization coefficient and quantizing the output signal of the orthogonal transform means.

An eighth invention is characterized by that the AC normalization coefficient calculation means makes an inverse of the number of pixels of a partial picture to be coded an AC normalization coefficient.

A ninth invention relates to a picture signal decoding apparatus, being supplied with a signal coded at a picture signal coding apparatus controlling a quantization step of an AC component of an input picture signal orthogonally transformed by an effective pixel indication signal indicating a partial picture to be coded and the effective pixel indication signal and for decoding the coded signal and is characterized by including:

decoding means for decoding the coded signal and outputting a decoded signal;
AC normalization coefficient calculation means for deriving an AC normalization coefficient for normalizing an AC component in the decoded signal output from the decoding means out of the effective pixel indication signal;
dequantization means for multiplying the quantization step of an AC component in the decoded signal obtained at the decoding means by an AC normalization coefficient derived at the AC normalization coefficient calculation means and dequantizing the decoded signal;
orthogonal transform base generation means for generating an orthogonal transform base of the output signal at the dequantization means by the effective pixel indication signal; and
orthogonal transform means for orthogonally transforming the output signal of the dequantization means by the orthogonal transform base and outputting a picture decoded signal.

A tenth invention is characterized by that the AC normalization coefficient calculation means makes an inverse of the number of pixels of a partial picture to be coded an AC normalization coefficient.

An eleventh invention relates to a picture signal coding apparatus, being supplied with an input picture signal and an effective pixel indication signal indicating a partial picture to be coded in the input picture signal and for coding a partial picture of a digital picture signal at every block and is characterized by including:

a plurality of pixel value generation means for outputting a substitution of a pixel value generated by at least two kinds of specified rules into a pixel value of a partial picture which is unnecessary for coding the input picture signal by the effective pixel indication signal;
a plurality of orthogonal transform means for orthogonally transforming each output signal of the plurality of pixel value generation means;
selection means for comparing each output of the plurality of orthogonal transform means and selecting an output which has less coding quantity; and
quantization means for quantizing the output signal of the selection means.

A twelfth invention is characterized by that the selection means selects an output signal having less high frequency components after orthogonal transformation.

A thirteenth invention is characterized by that the selection means selects an output signal having smaller sum of the absolute values of the components after orthogonal transformation.

A fourteenth invention relates to a pictures signal coding apparatus, being supplied with an input picture signal and a transparency signal expressing a synthesis ratio at synthesizing the input picture signal and the other picture signals and for coding a digital picture signal at every block and is characterized by including:

orthogonal transform means for orthogonally transforming the input picture signal;

normalization coefficient calculation means for deriving a normalization coefficient normalizing a transformed output signal of the orthogonal transform means out of the transparency signal; and

quantization means for multiplying the quantization step by the normalization coefficient and quantizing an output signal of the orthogonal transform means.

A fifteenth invention is characterized by that the normalization coefficient calculation means has a large transparency and makes a normalization coefficient large against a block including many pixels having a small ratio used at picture synthesis.

A sixteenth invention relates to a picture signal decoding apparatus, being supplied with a coded signal, normalizing an orthogonal transform output signal of the input picture by a transparency signal expressing a synthesis ratio at synthesizing an input picture signal and the other picture signals, and the transparency signal and is characterized by including:

decoding means for decoding the coded signal and outputting the decoded signal;

normalization coefficient calculation means for deriving a normalization coefficient normalizing each component of the decoded signal out of the transparency signal;

dequantization means for multiplying a quantization step of the decoded signal by the normalization coefficient derived at the normalization coefficient calculation means and dequantizing the decoded signal; and

orthogonal transform means for orthogonally transforming the output signal of the dequantization means and outputting the picture decoding signal.

A seventeenth invention is characterized by that the normalization coefficient calculation means has a large transparency and makes a normalization coefficient large against a block including many pixels having a small ratio used at picture synthesis.

A picture signal coding apparatus of the first and third inventions is what calculates a dynamic range of a DC component after orthogonal transformation at the DC normalization coefficient calculation means and eliminates a variation of the DC component by a different orthogonal transform base. Considering coding of k pieces of pixels at every block, when N pieces of pixels in an effective pixel area w inside a block having k pieces of pixels is orthogonally transformed, the energy magnitude of the DC component is different between area w and the whole block. If only the pixels in area w are orthogonally transformed, the DC component becomes $(N/k)^{1/2}$ times comparing with the case orthogonally transforming the whole block.

Generally, when a picture signal is orthogonally transformed and coded, a technique to code a difference of the DC components between adjacent blocks is used. Because in a picture signal, the DC components of the adjacent blocks have a strong correlation, it is tried to improve a compression efficiency by utilizing that the difference is zero. However, utilizing a technique that the number of pixels to be coded is different at every block, the DC difference does not concentrates near zero because the DC component varies.

When the number of pixels to be orthogonally transformed is N pieces, a picture signal coding apparatus can eliminate variation of the DC component between blocks by multiplying a quantization step by $(N/k)^{1/2}$. In this case, a coding efficiency at variable length coding means is improved, where differential coding of the DC component is also included in the variable length coding means.

A picture signal coding apparatus of the third invention multiplies the DC component of adjacent blocks by $N^{1/2}$ and eliminates a DC component variation due to the different orthogonal transform bases. Thus, a coding efficiency at the DC prediction signal coding means is increased.

A picture signal decoding apparatus of the second invention and a picture signal decoding apparatus of the fourth invention derive a DC normalization coefficient, utilizing an effective picture element indication signal, and correctly decode a coded signal at a picture signal coding apparatus of the first invention and a picture signal coding apparatus of the third invention.

A picture signal coding apparatus of the seventh invention is what calculates a dynamic range of an AC component after orthogonal transformation at AC normalization coefficient calculation means and eliminates a variation of an AC component due to different orthogonal transform bases. In the case in which orthogonal transformation is done after inserting a pixel value or the like, because the inserted pixel value has correlation with the other pixel values, a deviation occurs in a quantization error. Therefore, if the deviation of the quantized picture element is eliminated, it is possible to reduce the energy of an average quantization error lower than that of the other blocks. Let an average quantization error of a block (the number of pixels is N) not accompanying pixel insertion is delta, the error at every block when the number of pixels to be coded has only N pieces of components (inserting M-N pieces of pixels) is close to $(N^2/M) \cdot \delta$, assuming the quantization error is a white Gaussian noise.

Therefore, because the quantization error per pixel is $(N^2/M^2) \cdot \delta$, it becomes the same quantization error as that of the other blocks by multiplying the quantization step by M/N. In a picture signal coding apparatus, because M/N is a real number larger than 1 (including 1), the number of coding bits can be reduced by multiplying by an AC normalization coefficient calculated at the AC normalization coefficient calculation means and dequantizing by the quantization step.

A picture signal decoding apparatus of the ninth invention derives an AC normalization coefficient by using an effective pixel indication signal and correctly decodes a signal coded at a picture signal coding apparatus of the seventh invention.

A picture signal coding apparatus of the eleventh invention, using an effective pixel indication signal and utilizing that an inserted pixel value is independent of a decoding procedure of a picture signal decoding apparatus, generates the inserted pixel value at a plurality of pixel value generation means, selects a pixel value inserted at a pixel value generation means which has less coded number of bits after an orthogonal transformation and can reduce the coded number of bits by variable length coding. A method inserting an average value of the pixel values and a method generating pixel values at LPF can be used for pixel value generation means.

A picture signal coding apparatus of the fourteenth invention utilizes that for a block including pixel having a large transparency and less influence at picture synthesis, deterioration is visually not remarkable even for a coarse quantization step. For a block having a large transparency, normalization coefficient is made large and as a result, the coded number of bits can be adaptively reduced by making the quantization step coarse.

A picture signal decoding apparatus of the sixteenth invention derives a normalization coefficient utilizing a transparency signal and correctly decodes a signal coded at a picture signal coding apparatus of the fourteenth invention.

BRIEF EXPLANATION OF THE DRAWINGS

FIG. 1 is a block diagram showing a basic composition of a picture signal coding apparatus in accordance with a first exemplary embodiment of the present invention.

FIG. 2 is a block diagram showing a basic composition of a picture signal decoding apparatus in accordance with a second exemplary embodiment of the present invention.

FIG. 3 is a block diagram showing a basic composition of a picture signal coding apparatus in accordance with a third exemplary embodiment of the present invention.

FIG. 4 is a block diagram showing a basic composition of a picture signal decoding apparatus in accordance with a fourth exemplary embodiment of the present invention.

FIG. 5 is a block diagram showing a basic composition of a picture signal coding apparatus in accordance with a fifth exemplary embodiment of the present invention.

FIG. 6 is a block diagram showing a basic composition of a picture signal decoding apparatus in accordance with a sixth exemplary embodiment of the present invention.

FIG. 7 is a block diagram showing a basic composition of a picture signal coding apparatus in accordance with a seventh exemplary embodiment of the present invention.

FIG. 8 is a block diagram showing a basic composition of a picture signal coding apparatus in accordance with an eighth exemplary embodiment of the present invention.

FIG. 9 is a block diagram showing a basic composition of a picture signal decoding apparatus in accordance with a ninth exemplary embodiment of the present invention.

THE PREFERRED EXEMPLARY EMBODIMENT OF THE PRESENT INVENTION

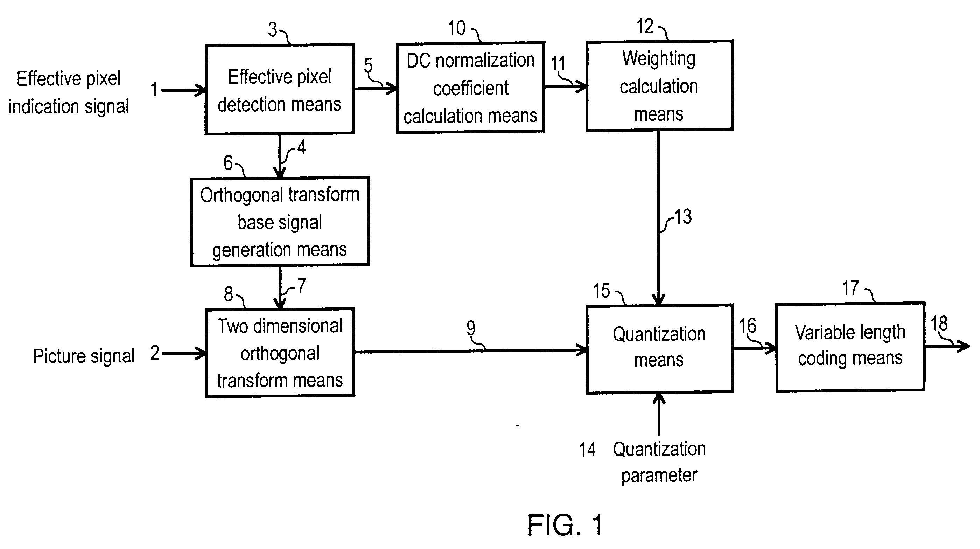

A picture signal coding apparatus in accordance with a first exemplary embodiment of the present invention is explained below, referring the drawings. FIG. 1 is a block diagram showing a basic composition of a picture signal coding apparatus in accordance with a first exemplary embodiment of the present invention. In the drawing, an effective pixel indication signal 1 corresponding to a picture signal and a picture signal 2 which is made into a block are supplied to a picture signal coding apparatus. An effective pixel detection means 3 detects effective pixels which are picture elements to be coded by effective pixel indication signal 1. An effective pixel information 4 output from effective pixel detection means 3 is supplied to an orthogonal transform base generation means 6 and a number of pixels signal 5 is supplied to a DC normalization coefficient calculation means 10 as a signal indicating the number of effective pixels of the block.

Orthogonal transform base generation means 6 generates an orthogonal transform base 7 and supplies it to two dimensional orthogonal transform means 8. Two dimensional orthogonal transform means 8 orthogonally transforms picture signal 2 by orthogonal transform base 7 and outputs an orthogonal transform signal 9. DC normalization coefficient calculation means 10 calculates a DC normalization coefficient 11 from number of pixels signal 5 and supplies it to weighting calculation means 12. Weighting calculation means 12 calculates a weighting coefficient 13 at quantization and outputs it and the weighting coefficient 13 is supplied to quantization means 15 together with a quantization parameter 14.

Quantization means 15 calculates a quantization step from weighting coefficient 13 and quantization parameter 14, quantizes an orthogonal transform signal 9 and outputs a quantization value 16. Variable length coding means 17 codes quantization value 16 in variable length and outputs a coded signal 18.

The function of a picture signal coding apparatus in accordance with a first exemplary embodiment composed like above is explained below. A position of an effective pixel to be coded is indicated by effective pixel indication signal 1. Orthogonal transform base generation means 6 generates a specified orthogonal transform base 7 from the effective pixel position in the corresponding block. Two dimensional orthogonal transform means 8 orthogonally transforms picture signal 2 by using orthogonal transform base 7 and outputs an orthogonal transform signal 9.

On the other hand, DC normalization coefficient calculation means 10 calculates a DC normalization coefficient 11 from number of pixels signal 5. For example, the DC normalization coefficient 11 is a function of the effective number of pixels and the effective number of pixels. Weighting calculation means 12 calculates a weighting coefficient 13 of the DC component corresponding to the value of DC normalization coefficient 11. Quantization means 15 calculates a quantization step from weighting coefficient 13 and a quantization parameter 14, quantizes orthogonal transform signal 9 and outputs quantization value 16. Quantization parameter 14 is a parameter to vary a compression ratio at every block used for varying the compression ratio by MPEG and if the quantization parameter is large, coding distortion becomes large but the coded number of bits becomes small.

As an example of a quantization step, a product of a quantization parameter 14 and a weighting coefficient 13 is thought. A quantization value 16 generated at quantization means 15 is coded with a variable length at a variable length coding means 17 and is output as a coded signal 18. At variable length coding means 17, it is possible not only to code at every block, but to code a difference from the block input in past with a built-in delay buffer.

The above signal processing is explained below, using equations. A DC normalization coefficient calculation means 10 shown in FIG. 1 is provided for calculating a dynamic range of the DC component after orthogonal transformation and eliminating a variation of the DC component due to a different orthogonal transform base. If the number of pixels of a block B is k pieces and let consider to code each pixel value ($Xi$; i=1, 2, ...k) at every block. If an effective pixel area inside block B having k pieces of picture elements is w and N pieces of pixels existing in effective pixel area w is orthogonally transformed, the DC component $DCw$ of effective pixel area w is expressed by Eq.(1).

$$DC_W = \frac{1}{\sqrt{N}} \sum_W Xi \qquad \text{(Eq. 1)}$$

If it is orthogonally transformed in whole block B, the DC component, $DC_{BLOCK}$ is expressed by Eq. (2).

$$DC_{BLOCK} = \frac{1}{k} \sum_{BLOCK} Xi \qquad \text{(Eq. 2)}$$

Here, if an average value of pixel value $Xi$ is expressed by $X_{AV}$, each DC component is expressed by Eq. (3).

$$DC_W = \frac{1}{\sqrt{N}} \sum_W Xi = \frac{1}{\sqrt{N}} \sum_W X_{AV} = \sqrt{N} X_{AV} \qquad \text{(Eq. 3)}$$

$$DC_{BLOCK} = \frac{1}{\sqrt{k}} \sum_{BLOCK} Xi = \frac{1}{\sqrt{k}} \sum_{BLOCK} X_{AV} = \sqrt{k} X_{AV}$$

Therefore, only the picture element of effective pixel area w is orthogonally transformed, the DC component is increased by a ratio expressed by Eq. (4), compared with the case whole block B is orthogonally transformed.

$$\sqrt{\frac{N}{k}} \qquad \text{(Eq. 4)}$$

Generally, when a picture signal is orthogonally transformed and coded, a procedure to code a difference between the DC components of the adjacent blocks is used. Because the DC components of the adjacent blocks have a strong correlation, the compression ratio is tried to be improved by utilizing that the difference between them becomes zero. However, if a procedure in which the number of pixels to be coded is different from block to block is used like the above, the difference of the DC components does not become zero.

In a picture signal coding apparatus in accordance with the first exemplary embodiment, a variation of the DC component between blocks is eliminated by increasing (multiplying) the quantization step by the value expressed by Eq. (5).

$$\sqrt{\frac{N}{k}} \qquad \text{(Eq. 5)}$$

Thus, the coding efficiency at variable length coding means 17 increases. At variable length coding means 17, coding of the difference between the DC components is also assumed to be included.

Thus, according to the exemplary embodiment, a suitable weighting of the DC component is made to the corresponding block by effective pixel indication signal 1, an optimum quantization is done at quantization means 15 and an efficient picture signal coding apparatus can be realized which has less coded number of bits and is independent on the number of effective pixels.

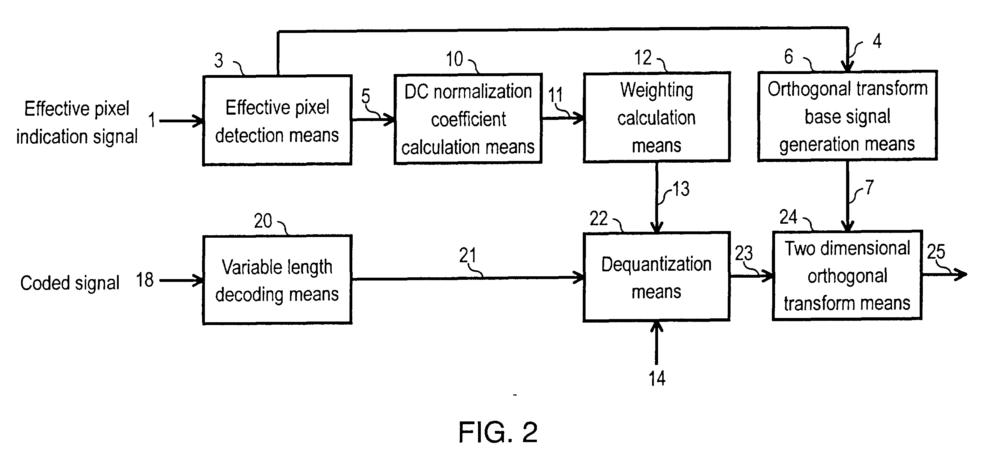

A picture signal decoding apparatus in accordance with a second exemplary embodiment of the present invention is explained below, referring to FIG. 2. FIG. 2 is a block diagram of a basic composition of a picture signal decoding apparatus in accordance with the second exemplary embodiment and the blocks having similar functions to those of the first exemplary embodiment are numbered with the same reference numbers and detailed explanation is omitted. A picture signal decoding apparatus of the second exemplary embodiment derives a DC normalization coefficient by utilizing an effective pixel indication signal and correctly decodes a coded signal 18 coded at the picture signal coding apparatus shown in FIG. 1.

In FIG. 2, an effective pixel indication signal 1 is a signal indicating an effective pixel corresponding to a pixel signal. A coded signal 18 is a signal coded at a picture signal coding apparatus. An effective pixel detection means 3 detects an effective pixel which is a pixel to be coded out of effective pixel indication signal 1 and outputs effective pixel information 4 and a number of pixels signal 5 expressing the number of pixels of the corresponding block. Orthogonal transform base generation means 6 generates an orthogonal transform base 7.

DC normalization coefficient calculation means 10 calculates a DC normalization coefficient 11 from a number of pixels signal 5 and gives it to weighting calculation means 12. Weighting calculation means 12 calculates a weighting coefficient 13 at quantization. Variable length decoding means 20 decodes a coded signal 18 and outputs a decoded signal 21. Dequantization means 22 calculates a quantization step from a quantization parameter 14 and weighting coefficient 13 and outputs a dequantization value 23. Two dimensional orthogonal transform means 24 orthogonally transforms dequantization value 23 by orthogonal transform base 7 and outputs a picture decoded signal 25.

The function of a picture signal decoding apparatus of second exemplary embodiment composed like the above is explained below. The blocks and the signals numbered with 1-7 and 10-14 shown in FIG. 2 are similar to those of the first exemplary embodiment and their explanations are omitted. Coded signal 18 is decoded at variable length decoding means 20, that is reverse of coding at variable length coding means 17 shown in FIG. 1 and is transformed into a decoded signal 21. Dequantization means 22 calculates a quantization step from weighting coefficient 13 and quantization parameter 14 for decoded signal 21 and outputs a dequantization value 23 by dequantizing. The quantization step is similar to that at quantization means 15 of the first exemplary embodiment.

Two dimensional orthogonal transform means 24 orthogonally transforms dequantization value 23 and outputs a picture decoded signal 25. The orthogonal transformation is a reverse transformation of the transformation at two dimensional orthogonal transformation means 8 of the first exemplary embodiment.

Thus, according to the second exemplary embodiment, a suitable weighting of the DC component is done for a corresponding block by using an effective pixel indication signal 1 and dequantization is done with the same quantization step as that of the picture signal coding apparatus at dequantization means 22. Accordingly, a coded signal 18 generated at the picture signal coding apparatus of the first exemplary embodiment can be correctly decoded.

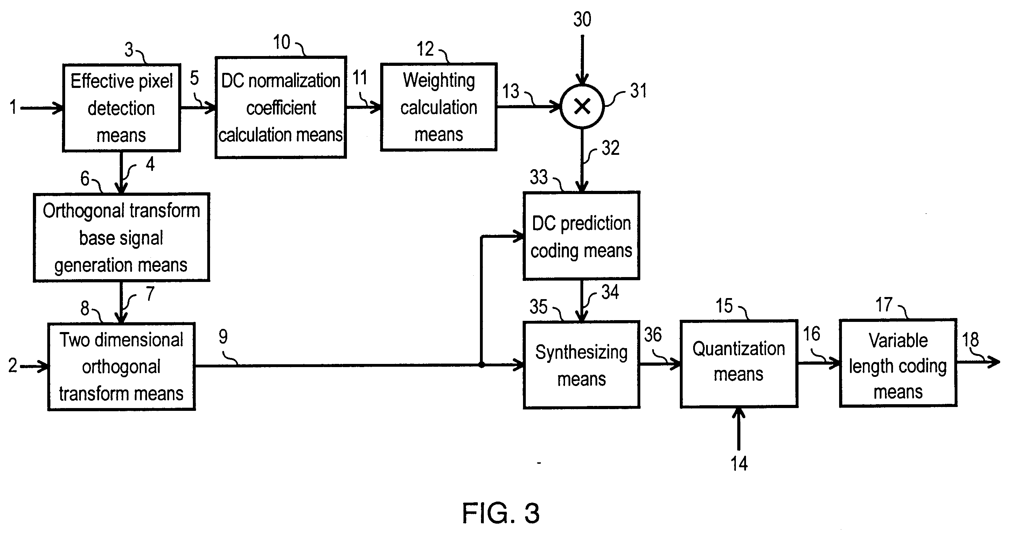

A picture signal coding apparatus in accordance with a third exemplary embodiment of the present invention is explained below, referring to the drawing. FIG. 3 is a block diagram of a basic composition of a picture signal coding apparatus in accordance with the third exemplary embodiment. In FIG. 3, blocks and signals numbered 1-18 are similar to those of the first exemplary embodiment and their explanations are omitted. A picture signal coding apparatus of the third exemplary embodiment increases a coding efficiency of the DC prediction coding means by multiplying the DC component of the adjacent block by the value expressed by Eq. (5) and eliminating a variation of the DC component due to a different orthogonal transform base.

Multiplication means 31 multiplies a DC component 30 of a reference block by a weighting coefficient 13 and outputs a product signal 32. DC predicting signal coding means 33 is supplied with product signal 32 and orthogonal transform signal 9 output from two dimensional orthogonal transform means 8, calculates a DC differential signal 34 and outputs it. Synthesis means 35 replaces a DC component of orthogonal transform signal 9 by DC differential signal 34 and outputs an orthogonal transform signal 36.

Only the functions of the different parts of the third exemplary embodiment composed like the above from those of a picture signal coding apparatus of the first exemplary embodiment is explained below. Multiplication means 31 multiplies DC component 30 of the reference block by weighting coefficient 13. Because weighting coefficient 13 expresses a variation component of the DC block of the corresponding block due to the effective number of pixels, product signal 32 is a signal which the variation component due to the effective number of pixels is normalized and the prediction efficiency of DC predicting signal coding means 33 becomes large regardless of the effective number of pixels.

Synthesis means 35 replaces only the DC component of orthogonal transform signal 9 by the output of predicting signal coding means 33 corresponding to the DC component normalized at the effective number of pixels. Variable length coding means 17 can increase a coding efficiency by variable length coding which is general-purpose and independent on the effective number of pixels.

Thus, according to the third exemplary embodiment, an efficient picture signal coding apparatus which is regardless of the effective number of pixels can be realized by normalizing the DC component of a reference block by weighting coefficient 13 at multiplication means 31 and coding a DC predicting signal, like the first exemplary embodiment.

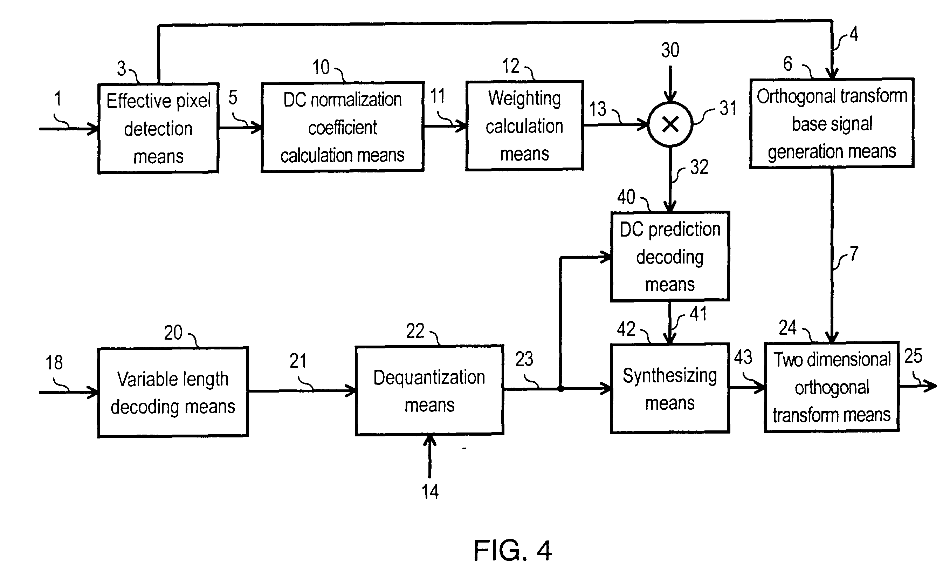

A picture signal decoding apparatus in accordance with a fourth exemplary embodiment of the present invention is explained below, referring to FIG. 4. FIG. 4 is a block diagram of a basic composition of a picture signal decoding apparatus in accordance with the fourth exemplary embodiment and the blocks having similar functions to those of the third exemplary embodiment are numbered with the same reference numbers and detailed explanations are omitted. A picture signal decoding apparatus of the fourth exemplary embodiment decodes a coded signal 18 coded at a picture signal coding apparatus shown in FIG. 3.

In FIG. 4, the names of blocks and signals numbered with 1-21 and 24-25 are the same as those of the second exemplary embodiment. DC predicting signal decoding means 40 is supplied with a product signal 32 of a multiplication means 31, decodes a DC component of a dequantization value 23 and outputs a DC decoding signal 41. Synthesis means 42 outputs a synthesized signal 43 made by synthesizing a DC component and an AC component.

The function of a picture signal decoding apparatus of the fourth exemplary embodiment composed like the above is explained below. The steps to output a product signal 32 and an orthogonal transform base 7 from an effective pixel indication signal 1 are the same as the case of a picture signal decoding apparatus of the second exemplary embodiment. Coded signal 18 decodes at variable length decoding means 20, in the reverse of coding of variable length coding means 17 shown in FIG. 3 and outputs a decoded signal 21.

Dequantization means 22 calculates a quantization step by using a quantization parameter 14 for a decoded signal 21 and outputs a dequantization value 23 by dequantization. Because the DC component of dequantization value 23 is prediction coded, DC prediction decoding means 40 adds a value multiplying the DC component of a reference block by product signal 32 to the DC component of dequantization value 23 and outputs a DC coded signal 41.

The DC component of the reference block is assumed to be stored in DC prediction decoding means 40 for making the explanation of the function simple and the DC component of the corresponding block is assumed to be used for decoding the DC component of the following block. Synthesis means 42 replaces the DC component of dequantization value 23 to the DC decoded signal 41 and outputs a synthesized signal 43. Two dimensional orthogonal transform means 24 orthogonally transforms synthesized signal 43 and outputs a picture decoded signal 25.

Thus, according to the fourth exemplary embodiment, coded signal 18 which is made by DC prediction coding can be correctly decoded by normalizing DC component 30 of the reference block by weighting coefficient 13 at multiplication means 31.

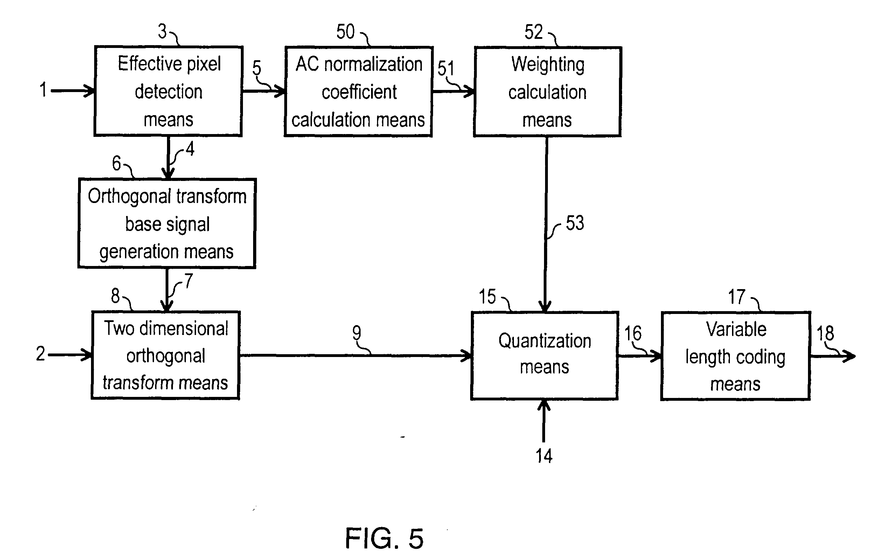

A picture signal coding apparatus in accordance with a fifth exemplary embodiment of the present invention is explained below, referring to the drawing. FIG. 5 is a block diagram of a basic composition of a picture signal coding apparatus in accordance with the fifth exemplary embodiment. In FIG. 5, blocks and signals numbered 1-18 are similar to those of the first exemplary embodiment and their explanations are omitted.

An AC normalization coefficient calculation means 50 calculates an AC normalization coefficient 51 from a number of pixels signal 5 outputted from an effective pixel detection means 3. A weighting calculation means 52 calculates a weighting coefficient 53 at quantization.

A picture signal coding apparatus in accordance with the fifth exemplary embodiment calculates a dynamic range of an AC component after orthogonal transformation at AC normalization coefficient calculation means 50 and eliminates a variation of the AC component due to a different orthogonal transform base. In the case in which orthogonal transformation is done by inserting a picture element value, a deviation occurs in a quantization error, because the inserted pixel value has a correlation with the other pixel value. Therefore, if the deviation of the quantized pixel is removed, it is possible to reduce energy of an average quantization error more than the other block.

If a deviation of the quantization error of the block (the number of pixels is N) which does not accompany pixel value insertion is delta, in the case in which the number of pixels to be coded has only N pieces of components, that is in the case in which M-N pieces of pixels are inserted, the error at every block becomes close to a value expressed by Eq. (6), assuming the quantization error is a white Gaussian noise.

$$\frac{N^2}{M}\delta \qquad \text{(Eq. 6)}$$

Therefore, a quantization error per pixel is expressed by Eq. (7).

$$\frac{N^2}{M^2}\delta \qquad \text{(Eq. 7)}$$

The quantization error becomes the same as that of the other block by multiplying a quantization step by the following Eq. (8).

$$\frac{M}{N} \qquad \text{(Eq. 8)}$$

Because the value of Eq. (8) is a real number equal to and more than 1, the coded number of bits can be reduced by quantizing by a quantization step multiplied by an AC normalization coefficient calculated at AC normalization coefficient calculation means 50.

Thus, AC normalization coefficient calculation means 50 calculates an AC normalization coefficient 51 orthogonally transformed from number of pixels signal 5. The following function can be realized similarly even if the DC component is included in AC normalization coefficient 51. For example, a reverse value of the effective number of pixels of a block is thought as AC normalization coefficient 51. Weighting calculation means 52 calculates a weighting coefficient 53 of each coefficient component corresponding to the value of AC normalization coefficient 51.

Quantization means 15 calculates a quantization step from weighting coefficient 53 and a quantization parameter 14 and outputs a quantization value 16. Because the quantization step has an effect to average the deviations of quantization errors depending on the effective number of pixels, the coding efficiency can be improved by suitably sharing the number of bits. As an example of a quantization step, a product of a quantization parameter 14 and a weighting coefficient 53 is thought.

Thus, according to the fifth exemplary embodiment, the AC component of the corresponding block is suitably weighted by using an effective pixel indication signal 1, an optimum quantization is done at quantization means 15 and a picture signal coding apparatus can be realized which has less coded number of bits, is independent on the number of effective pixels and is efficient.

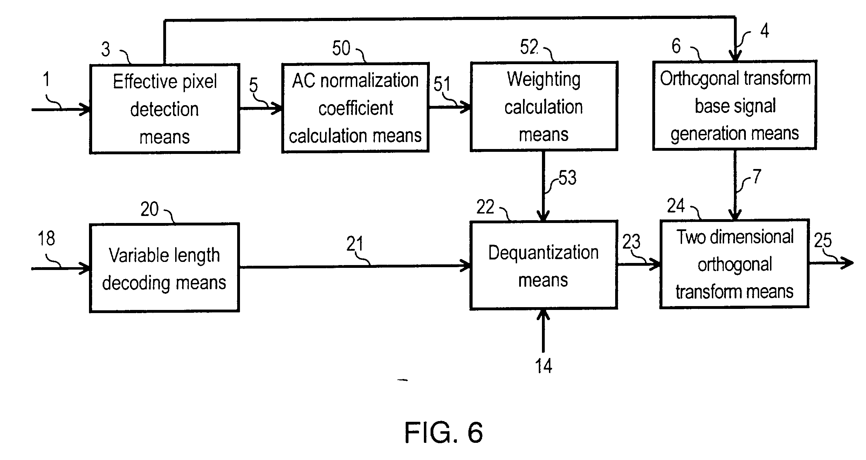

A picture signal decoding apparatus in accordance with a sixth exemplary embodiment of the present invention is explained below, referring to FIG. 6. FIG. 6 is a block diagram of a basic composition of a picture signal decoding apparatus in accordance with the sixth exemplary embodiment and the blocks having similar signals and similar functions to those of the second exemplary embodiment are numbered with the same reference numbers and detailed explanations are omitted. A picture signal decoding apparatus of the sixth exemplary embodiment decodes a coded signal 18 coded at a picture signal coding apparatus shown in FIG. 5.

Only the functions of the different parts of the sixth exemplary embodiment composed like the above from those of a picture signal coding apparatus of the second exemplary embodiment is explained below. A dequantization means 22 is supplied with a decoded signal 21, calculates a quantization step from a weighting coefficient 53 and a quantization parameter 14 and outputs a dequantization value 23 by dequantization. Weighting coefficient 53 is the same as weighting coefficient 53 in the fifth exemplary embodiment. Therefore, the quantization step is the same as quantization step 15 in the fifth exemplary embodiment. Although the picture signal decoding apparatus gives weighting for a DC component in the second exemplary embodiment, in the sixth exemplary embodiment, it is different in giving weighting for all coded orthogonal transform components

Thus, according to the sixth exemplary embodiment, the AC component of the corresponding block is suitably weighted by using an effective pixel indication signal 1, dequantization is done by the same quantization step as that of the picture signal coding apparatus and a coded signal 18 of the fifth exemplary embodiment can be correctly decoded.

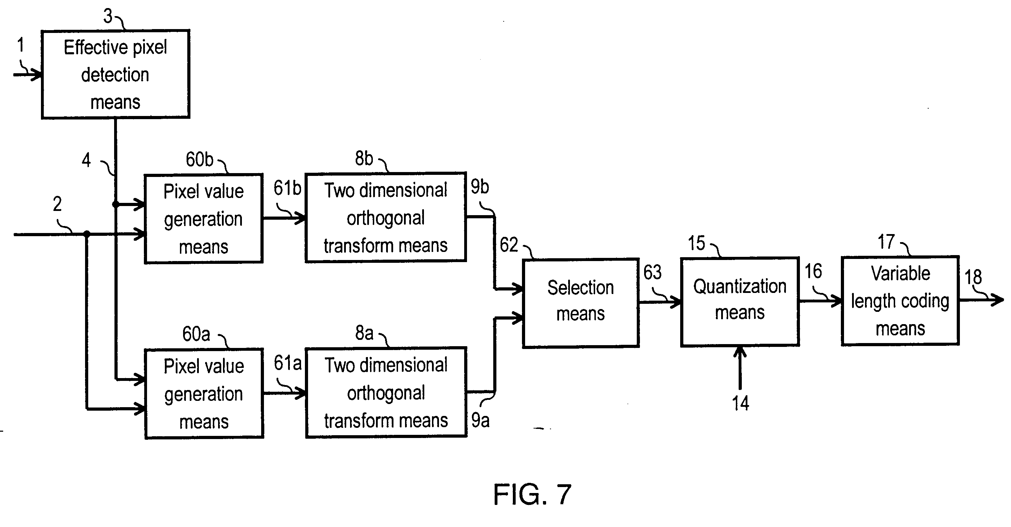

A picture signal coding apparatus in accordance with a seventh exemplary embodiment of the present invention is explained below, referring to the drawing. FIG. 7 is a block diagram of a basic composition of a picture signal coding apparatus in accordance with the seventh exemplary embodiment. In FIG. 7, an effective pixel indication signal 1 corresponding to a pixel signal and a picture signal 2 made into a block are supplied to a picture signal coding apparatus. Pixel value generation means 60a and 60b generate picture signals 61a and 61b, each inserted with a specified value into a pixel value other than the effective pixel and outputs them.

Two dimensional orthogonal transform means 8a orthogonally transforms picture signal 61a and outputs orthogonal transform signal 9a. Similarly, two dimensional orthogonal transform means 8b orthogonally transforms picture signal 61b and outputs orthogonal transform signal 9b. Selection means 62 selects one of orthogonal transform signals 9a and 9b and outputs an orthogonal transform signal 63. Quantization means 15 calculates a quantization step by using a quantization parameter 14 and outputs a quantization value 16. Variable length coding means 17 transforms quantization value 16 into a coded signal 18 having a variable length.

The function of a picture signal coding apparatus of the seventh exemplary embodiment composed like the above is explained below. In the pixel position made into a block, the position of an effective pixel to be coded is expressed by an effective picture indication signal 1. Pixel value generation means 60a and 60b replace a pixel value other than the effective pixels in the corresponding block into a pixel value by each specified rule from picture signal 2 (for example, a method to generate a pixel value so that the high frequency component is small, a method to generate a pixel value by using an average value in the block or the like) and outputs picture signals 61a and 61b. Picture signals 61a and 61b are orthogonally transformed into orthogonal transform signals 9a and 9b at two dimensional orthogonal transform means 8a and 8b, respectively.

Selection means 62 compares orthogonal transform signals 9a and 9b, selects either of them by a specified rule (for example, selects one having a less coded number of bits) and outputs an orthogonal transform signal 63. As a result, a block inserted with a pixels value other than the effective pixel position at every block can be suitably selected and the coding efficiency can be increased.

Because orthogonal transform signals 9a and 9b are nearly equal when all pixels in a block are effective pixels, either one of two dimensional orthogonal transform means 8a and 8b may be omitted to calculate. Quantization means 15 calculates a quantization step from a quantization parameter 14 and outputs a quantization value 16. The quantization value 16 is coded with a variable length at a variable length coding means 17 and is output as a coded signal 18.

Thus, according to the seventh exemplary embodiment, by using an effective pixel indication means and by using that the inserted pixel value is independent on the decoding procedure of a picture signal decoding apparatus, the coded number of bits can be decreased by generating the inserted pixel value at a plurality of pixel value generation means 60a and 60b, selecting the pixel value inserted at the pixel generation means having less coded number of bits after orthogonal transformation and coding with a variable length. As pixel value generation means 60a and 60b, for example, it is possible to use a method to insert an average value of the pixel values or a method to generate a pixel value at LPF.

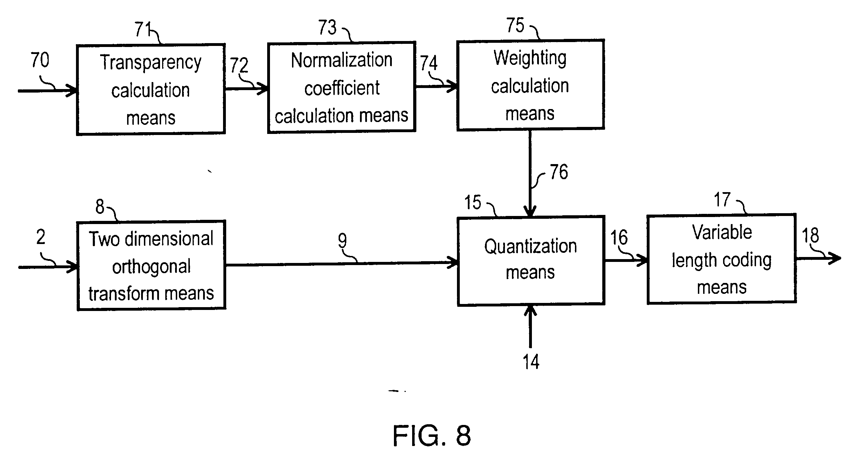

A picture signal coding apparatus in accordance with a eighth exemplary embodiment of the present invention is explained below, referring to the drawing. FIG. 8 is a block diagram of a basic composition of a picture signal coding apparatus in accordance with the eighth exemplary embodiment. In FIG. 8, a transparency signal 70 corresponding to a pixel signal and a picture signal 2 made into a block are supplied to a picture signal coding apparatus. Transparency calculation means 71 calculates transparency 72 at every block. Normalization coefficient calculation means 73 calculates normalization coefficient 74 of the corresponding block from transparency signal 72.

Weighting calculation means 75 calculates a weighting coefficient 76 at quantization. Two dimensional orthogonal transform means 8 orthogonally transforms a picture signal 2 and outputs an orthogonal transform signal 9. Quantization means 15 calculates a quantization step from a quantization parameter 14 and weighting coefficient 76 and outputs a quantization value 16. Variable length coding means 17 codes with variable length the quantization value 16 and outputs a coded signal 18.

The function of a picture signal coding apparatus of the eighth exemplary embodiment composed like the above is explained below. Transparency information of each pixel corresponding to a picture signal made into a block is expressed by a transparency signal 70. Two dimensional orthogonal transform means 8 orthogonally transforms picture signal 2 into an orthogonal transform signal 9. On the other hand, transparency calculation means 71 calculates transparency of the corresponding block (for example, an average transparency, a minimum transparency, etc. of the corresponding block) from transparency signal 70 and outputs as a transparency signal 72.

A large value of transparency signal 72 means that it is difficult to visually influence because the pixel is transparent. In this case, normalization coefficient calculation means 73 outputs a normalization coefficient 74 having a coarse quantization step. Quantization means 15 calculates a quantization step from a weighting coefficient 76 and a quantization parameter 14 and outputs a quantization value 16. Because the quantization step has an effect to remove a visual influence which is dependent on a transparency, the coding effect can be increased preventing large deterioration of picture quality.

Quantization value 16 is variable length coded at variable length coding means 17 and is output as a coded signal 18. Variable length coding means 17 not only codes at every block but has a delay buffer in it and can code the difference from the block input in the past.

Thus, according to the eighth exemplary embodiment, a suitable weighting of an orthogonal transform is done from a transparency signal 70 and as a result, an optimum quantization is done at quantization means 15 and an efficient picture signal coding apparatus can be realized which has less coded number of bits, is dependent on the transparency and eliminates deterioration of picture quality.

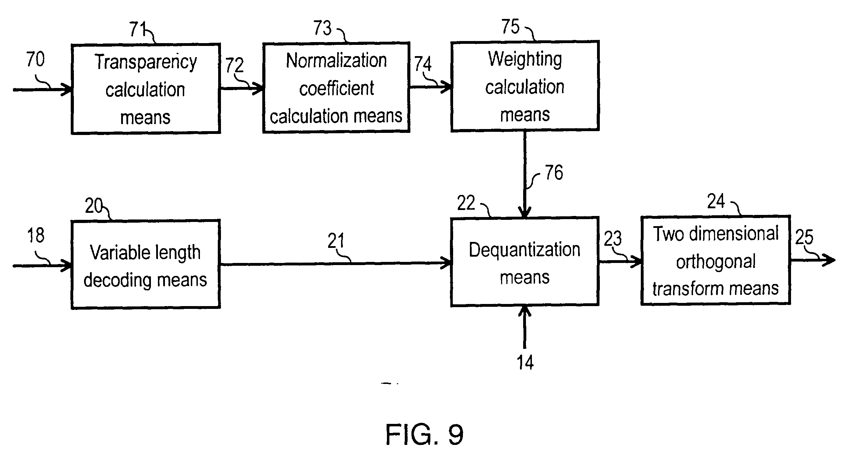

A picture signal decoding apparatus in accordance with a ninth exemplary embodiment of the present invention is explained below, referring to FIG. 9. FIG. 9 is a block diagram of a basic composition of a picture signal decoding apparatus in accordance with the ninth exemplary embodiment, which decodes a coded signal 18 coded at a picture signal coding apparatus shown in FIG. 8.

In FIG. 9, the blocks and signals numbered with 70-76 are similar to those of the eighth exemplary embodiment shown in FIG. 8 and their explanations are omitted. A variable length decoding means 20 decodes a coded signal 18 and outputs a decoded signal 21. Dequantization means 22 calculates a quantization step from a quantization parameter 14 and a weighting coefficient 76 and outputs a dequantization value 23. Two dimensional orthogonal transform means 24 orthogonally transforms dequantization value 23 and outputs a picture decoded signal 25.

The function of a picture signal decoding apparatus of the ninth exemplary embodiment composed like the above is explained below. The functions of the blocks and the signals numbered with 70-76 are the same as those of the eighth exemplary embodiment and their explanations are omitted. At variable length decoding means 20, coded signal 18 is decoded in reverse to the coding at variable length coding means 17 in the eighth exemplary embodiment and is converted into a decoded signal 21.

Dequantization means 22 calculates a quantization step, using a decoded signal 21, a weighting coefficient 76 and a quantization parameter 14 and outputs a dequantization value 23 after dequantization. The quantization step is similar to that at dequantization means 15 of the eighth exemplary embodiment. Dequantization value 23 is orthogonally transformed at two dimensional orthogonal transform means 24 and is output as a picture decoded signal 25. The orthogonal transformation made at two dimensional orthogonal transform means 24 is similar to reverse transformation at orthogonal transform means 8 in the first exemplary embodiment.

According to the ninth exemplary embodiment, a suitable weighting is done from a transparency signal 70 to the orthogonal transform coefficient of the corresponding block and reverse quantization is done at reverse quantization means 22 by a similar quantization step to that of the picture signal coding apparatus. Thus, a coded signal 18 of the eighth exemplary embodiment can correctly be decoded.

Because the composing blocks are almost same in the above exemplary embodiments, they can be used by combination. Because a transparency signal which transparency is other than 100% means an effective pixel, an affective pixel indication signal can be made from a transparency signal.

A system in which a picture signal coding apparatus and a picture signal decoding apparatus in accordance with the present invention are connected by wireless or wired communication means can be composed. In this case, a composition is possible in which data of a coded signal coded at the picture signal coding apparatus is temporarily stored in a server and is sent to the picture signal decoding apparatus when it is necessary.

AVAILABILITY IN THE INDUSTRIAL FIELD

As explained above in detail, according to the present invention, a picture signal coding apparatus and a picture signal decoding apparatus can be realized which are optimized from a view point of bit rate at quantization means quantizing after orthogonally transforming a block having a different size.

In the present invention, an efficient method of pixel value insertion is also adapted and a picture signal coding apparatus and a picture signal decoding apparatus having a high coding efficiency can be presented.

Further, in the present invention, a picture signal coding apparatus and a picture signal decoding apparatus having a higher efficiency can be realized by optimizing quantization means, using transparency information.

In any invention, when a semitransparent partial digital picture is inserted into one frame of a digital picture, energy distributions of DC coefficients and AC coefficients of an inserted picture and an inserting picture become uniform and a coding efficiency after quantization is improved.

A system having a good transmission efficiency can be realized by composing a system connecting a picture signal coding apparatus and a picture signal decoding apparatus of the present invention by communication means.

NOTATIONS:

| | |
|---|---|
| 1 | effective pixel indication signal |
| 2 | picture signal |
| 3 | effective pixel detection means |
| 4 | effective pixel information |
| 5 | number of pixels signal |
| 6 | orthogonal transform base generation means |
| 7 | orthogonal transform base |
| 8, 8a, 8b | two dimensional orthogonal transform means |
| 9, 9a, 9b | orthogonal transform signal |

| | |
|---|---|
| 10 | DC normalization coefficient calculation means |
| 11 | DC normalization coefficient |
| 12 | weighting calculation means |
| 13 | weighting coefficient |
| 14 | quantization parameter |
| 15 | quantization means |
| 16 | quantization value |
| 17 | variable length coding means |
| 18 | coded signal |
| 20 | variable length decoding means |
| 21 | decoded signal |
| 22 | dequantization means |
| 23 | dequantization value |
| 24 | two dimensional orthogonal transform means |
| 25 | picture decoded signal |
| 30 | DC component of reference block |
| 31 | multiplication means |
| 32 | product signal |
| 33 | DC prediction coding means |
| 34 | DC differential signal |
| 35, 42 | synthesizing means |
| 36 | orthogonal transform signal |
| 40 | DC prediction decoding means |
| 41 | DC decoded signal |
| 43 | synthesized signal |
| 50 | AC normalization coefficient calculation means |
| 51 | AC normalization coefficient |
| 52 | weighting calculation means |
| 53 | weighting coefficient |
| 60a, 60b | pixel value generation means |
| 61a, 61b | picture signal |
| 62 | selection means |
| 63 | orthogonal transform signal |
| 70 | transparency signal |
| 71 | transparency calculation means |
| 72 | transparency signal |
| 73 | normalization coefficient calculation means |
| 74 | normalization coefficient |
| 75 | weighting calculation means |
| 76 | weighting coefficient |

**Claims**

1. A picture signal coding apparatus, being supplied with an input picture signal and an effective pixel indication signal indicating a partial picture to be coded in said input picture signal and for coding the partial picture of a digital picture signal at every block, and is characterized by including:

   orthogonal transform base generation means for generating an orthogonal transform base of said input picture signal by said effective pixel indication signal;
   orthogonal transform means for orthogonally transforming said input picture signal by an orthogonal transform base generated at said orthogonal transform base generation means;
   DC normalization coefficient calculation means for deriving a DC normalization coefficient for normalizing a DC component of a transformed output signal of said orthogonal transform means from said effective pixel indication signal; and
   quantization means for multiplying the quantization step by the DC normalization coefficient obtained at said DC normalization coefficient calculation means for a DC component in an orthogonal transform signal supplied from said orthogonal transform means and quantizing said orthogonal transform signal by a standard quantization step for a non DC component in the orthogonal transform signal supplied from said orthogonal transform means.

2. A picture signal decoding apparatus, being supplied with a signal coded by a picture signal coding apparatus controlling a quantization step of a DC component orthogonally transformed from an input picture signal by an effective pixel indication signal indicating a partial picture to be coded and said effective pixel indication signal and for decoding said coded signal, and is characterized by including:

decoding means for decoding said coded signal and outputting a decoded signal;
DC normalization coefficient calculation means for deriving a DC normalization coefficient for normalizing a DC component in the decoded signal output from said decoding means out of said effective pixel indication signal;
dequantization means for dequantizing by multiplying the quantization step by the DC normalization coefficient obtained at said DC normalization coefficient calculation means for a DC component in the decoded signal obtained at the said decoding means and dequantizing said decoded signal by a standard quantization step for a non DC component in the decoded signal obtained at said decoding means;
orthogonal transform base generation means for generating an orthogonal transform base of an output signal of said dequantization means by said effective pixel indication signal; and
orthogonal transform means for outputting a picture decoded signal after orthogonally transforming an output signal of said dequantization means by said orthogonal transform base.

3. A picture signal coding apparatus, being supplied with an input picture signal, an effective pixel indication signal indicating a partial picture to be coded in said input picture signal and a DC component of a reference block and for coding the partial picture in a digital picture signal at every block and differential coding the DC component at every block, and is characterized by including:

orthogonal transform base generation means for generating an orthogonal transform base of said input picture signal by said effective pixel indication signal;
orthogonal transform means for orthogonally transforming said input picture signal by said orthogonal transform base;
DC normalization coefficient calculation means for deriving a DC normalization coefficient for normalizing a DC component of a transformed output signal of said orthogonal transform means out of said effective pixel indication signal;
DC prediction coding means for multiplying the DC block of said reference block by the DC normalization coefficient calculated at said DC normalization coefficient calculation means and outputting a DC differential component which is a difference between the obtained DC component and the DC component of said reference block; and
quantization means for quantizing a DC differential component in the output of said DC prediction coding means and an AC component in the output signal of said orthogonal transform means.

4. A picture signal coding apparatus, being supplied with a coded signal which a DC component orthogonally transformed from an input picture signal using an effective pixel indication signal showing a partial picture to be coded is coded at a picture signal coding apparatus compensating a DC component of a reference block, said effective pixel indication signal and a DC component of said reference block and for decoding said coded signal, and is characterized by including:

decoding means for decoding said coded signal and outputting the decoded signal;
dequantization means for dequantizing the decoded signal of said decoding means;
orthogonal transform base generation means for generating an orthogonal transform base of the output signal of said dequantization means by said effective pixel indication signal;
DC normalization coefficient calculation means for deriving a DC normalization coefficient for normalizing a DC component in the decoded signal output from said decoding means out of said effective pixel indication signal;
DC prediction decoding means for multiplying a DC component of said reference block by said DC normalization coefficient, adding it to a DC differential component of the output of said dequantization means and making the sum a DC component; and
orthogonal transform means for orthogonally transforming the DC component output from said DC decoding means by said orthogonal transform base and an AC component output from said dequantization means and outputting a picture decoded signal.

5. A picture signal coding apparatus as recited in claim 1 or claim 3; wherein

said DC normalization coefficient calculation means makes the root of the ratio of the number of pixels of a partial picture to be coded to the total number of pixels of the block a DC normalization coefficient.

6. A picture signal decoding apparatus as recited in claim 2 or claim 4; wherein

said DC normalization coefficient calculation means makes the root of the ratio of the number of pixels of a partial picture to be coded to the total number of pixels of the block a DC normalization coefficient.

7. A picture signal coding apparatus, being supplied with an input picture signal and an effective pixel indication signal indicating a partial picture to be coded of said input picture signal and for coding a partial picture of a digital picture signal at every block, and is characterized by including:

orthogonal transform base generation means for generating an orthogonal transform base of said input picture signal by said effective pixel indication signal;
orthogonal transform means for orthogonally transforming said input picture signal by the orthogonal transform base generated at said orthogonal transform base generation means;
AC normalization coefficient calculation means for deriving an AC normalization coefficient for normalizing an AC component of the transformed output signal of said orthogonal transform means from said effective pixel indication signal; and
quantization means for multiplying a quantization step by said AC normalization coefficient and quantizing the output signal of said orthogonal transform means.

8. A picture signal coding apparatus as recited in claim 7; wherein

said AC normalization coefficient calculation means makes an inverse of the number of pixels of a partial picture to be coded an AC normalization coefficient.

9. A picture signal decoding apparatus, being supplied with a signal coded at a picture signal coding apparatus controlling a quantization step of an AC component of an input picture signal orthogonally transformed by an effective pixel indication signal indicating a partial picture to be coded and said effective pixel indication signal and for decoding said coded signal, and is characterized by including:

decoding means for decoding said coded signal and outputting a decoded signal;
AC normalization coefficient calculation means for deriving an AC normalization coefficient for normalizing an AC component in the decoded signal output from said decoding means out of said effective pixel indication signal;
dequantization means for multiplying a quantization step of an AC component in the decoded signal obtained at said decoding means by an AC normalization coefficient derived at said AC normalization coefficient calculation means and dequantizing said decoded signal;
orthogonal transform base generation means for generating an orthogonal transform base of the output signal at said dequantization means by said effective pixel indication signal; and
orthogonal transform means for orthogonally transforming the output signal of said dequantization means by said orthogonal transform base and outputting a picture decoded signal.

10. A picture signal decoding apparatus as recited in claim 9; wherein

said AC normalization coefficient calculation means makes an inverse of the number of pixels of a partial picture to be coded an AC normalization coefficient.

11. A picture signal coding apparatus, being supplied with an input picture signal and an effective pixel indication signal indicating a partial picture to be coded in said input picture signal and for coding a partial picture of a digital picture signal at every block, and is characterized by including:

a plurality of pixel value generation means for outputting a substitution of a pixel value generated by at least two kinds of specified rules into a pixel value of a partial picture which is unnecessary for coding said input picture signal by said effective pixel indication signal;
a plurality of orthogonal transform means for orthogonally transforming each output signal of the plurality of pixel value generation means;

selection means for comparing each output of said plurality of orthogonal transform means and selecting an output having less coding quantity; and

quantization means for quantizing the output signal of said selection means.

**12.** A picture signal coding apparatus as recited in claim 11; wherein

said selection means selects an output signal having less high frequency components after orthogonal transformation.

**13.** A picture signal coding apparatus as recited in claim 11; wherein

said selection means selects an output signal having smaller sum of the absolute values of the components after orthogonal transformation.

**14.** A pictures signal coding apparatus, being supplied with an input picture signal and a transparency signal expressing a synthesis ratio at synthesizing said input picture signal and the other picture signals and for coding a digital picture signal at every block, and is characterized by including:

orthogonal transform means for orthogonally transforming said input picture signal;
normalization coefficient calculation means for deriving a normalization coefficient normalizing a transformed output signal of said orthogonal transform means out of said transparency signal; and
quantization means for multiplying a quantization step by said normalization coefficient and quantizing an output signal of said orthogonal transform means.

**15.** A picture signal coding apparatus as recited in claim 14; wherein

said normalization coefficient calculation means has a large transparency and makes a normalization coefficient large against a block including many pixels having a small ratio used at picture synthesis.

**16.** A picture signal decoding apparatus, being supplied with a coded signal, normalizing an orthogonal transform output signal of the input picture by a transparency signal expressing a synthesis ratio at synthesizing an input picture signal and the other picture signals, and the transparency signal, and is characterized by including:

decoding means for decoding said coded signal and outputting the decoded signal;
normalization coefficient calculation means for deriving a normalization coefficient normalizing each component of said decoded signals out of said transparency signal;
dequantization means for multiplying a quantization step of said decoded signal by the normalization coefficient derived at said normalization coefficient calculation means and dequantizing said decoded signal; and
orthogonal transform means for orthogonally transforming the output signal of said dequantization means and outputting a picture decoding signal.

**17.** A picture signal decoding apparatus as recited in claim 16; wherein

said normalization coefficient calculation means has a large transparency and makes a normalization coefficient large against a block including many pixels having a small ratio used at picture synthesis.

**18.** A picture signal coding method, being supplied with an input signal and an effective pixel indication signal indicating a partial picture to be coded of said input picture signal and coding a partial picture of a digital picture signal at every block, and is characterized by including:

a step for generating an orthogonal transform base of said input picture signal by said effective pixel indication signal;
a step for orthogonally transforming said input picture signal by said orthogonal transform base and outputting an orthogonal transform signal;
a step for deriving a DC normalization coefficient for normalizing a DC component of said orthogonal transform signal from said effective pixel indication signal; and
a step for quantizing said orthogonal transform signal by a quantization step multiplied by said DC normalization coefficient for a DC component in said orthogonal transform signal and quantizing said orthogonal transform signal by a standard quantization step for a non DC component in said orthogonal transform signal.

19. A picture signal decoding method, being supplied with a coded signal coded at a picture signal coding apparatus controlling a quantization step of a DC component orthogonally transformed from an input picture signal by an effective pixel indication signal indicating a partial picture to be coded and said effective pixel indication signal and decoding said coded signal, and is characterized by including:

a step for decoding said coded signal and outputting the decoded signal;
a step for deriving a DC normalization coefficient for normalizing a DC component in said decoded signal from effective pixel indication signal;
a step for dequantizing said decoded signal by a quantization step multiplied by said DC normalization coefficient for a DC component in said decoded signal, dequantizing said decoded signal by a standard quantization step for a non DC component in said decoded signal, and outputting the dequantized value;
a step for generating an orthogonal transform base of said dequantized value by said effective pixel indication signal; and
a step for orthogonally transforming said dequantized value by said orthogonal transform base and outputting a picture decoded signal.

20. A picture signal coding method, being supplied with an input picture signal, an effective pixel indication signal indicating a partial picture to be coded of said input picture signal and a DC component of a reference block, coding a partial picture of a digital picture signal at every block and differential coding the DC component at every block, and is characterized by including:

a step for generating an orthogonal transform base of said input picture signal by said effective pixel indication signal;
a step for orthogonally transforming said input picture signal by said orthogonal transform base and outputting an orthogonal transform signal;
a step for deriving a DC normalization coefficient for normalizing a DC component of said orthogonal transform signal from said effective pixel indication signal;
a step for multiplying a DC component of said reference block by said DC normalization coefficient and outputting a DC differential component which is a difference between the obtained DC component and the DC component of said reference block; and
a step for dequantizing said DC differential component and the AC component of said orthogonal transform signal.

21. A picture signal decoding method, being supplied with a coded signal coded at a picture signal coding apparatus in which a DC component of an input picture signal orthogonally transformed by an effective pixel indication signal indicating a partial picture to be coded compensates a DC component of a reference block, said effective pixel indication signal and a DC component of said reference block and decoding said coded signal, and is characterized by including:

a step for decoding said coded signal and outputting the decoded signal;
a step for dequantizing said decoded signal and outputting a dequantized value composed of a DC differential component and an AC component;
a step for generating an orthogonal transform base of said dequantized value by said effective pixel indication signal;
a step for deriving a DC normalization coefficient for normalizing a DC component in said decoded signal from said effective pixel indication signal;
a step for multiplying a DC component of said reference block by said DC normalization coefficient, adding the product to said DC differential component and making the sum a DC component; and
a step for orthogonally transforming said DC component and said AC component by said orthogonal transform base and outputting a picture decoded signal.

22. A picture signal decoding method, being supplied with an input picture signal and an effective pixel indication signal indicating a partial picture to be coded of said input picture signal and coding a partial picture of a digital picture signal at every block, and is characterized by including:

a step for generating an orthogonal transform base of said input picture signal by said effective pixel indication signal;

a step for orthogonally transforming said input picture signal by orthogonal transform base and outputting the orthogonal transform signal;

a step for deriving an AC normalization coefficient for normalizing an AC component of said orthogonal transform signal from said effective pixel indication signal; and

a step for multiplying a quantization step by said AC normalization coefficient and quantizing said orthogonal transform signal.

23. A picture signal decoding method, being supplied with a coded signal coded at a picture signal coding apparatus controlling a quantization step of an AC component of an input picture signal orthogonally transformed by an effective pixel indication signal indicating a partial picture to be coded and said effective pixel indication signal and decoding said coded signal, and is characterized by including:

a step for decoding said coded signal and outputting a decoded signal;

a step for deriving an AC normalization coefficient for normalizing an AC component in said decoded signal from said effective pixel indication signal;

a step for dequantizing said decoded signal by a quantization step of an AC component multiplied by said AC normalization coefficient and outputting the dequantized value;

a step for generating an orthogonal transform base of said dequantization value by said effective pixel indication signal; and

a step for orthogonally transforming said dequantization value by said orthogonal transform base and outputting a picture decoded signal.

24. A picture signal coding method, being supplied with an input picture signal and an effective pixel indication signal indicating a partial picture to be coded of said input picture signal and coding a partial picture of a digital picture signal at every block, and is characterized by including:

a plurality of pixel value generating steps for outputting a substitution of a pixel generated by at least two kinds of specified rules into a pixel value of a partial picture which is unnecessary of coding of said input picture signal by effective pixel indication signal;

a plurality of steps for orthogonally transforming each output signal of said plurality of pixel value generating steps and outputting orthogonal transform signals;

a selection process for comparing each of said orthogonal transform signals and selecting a signal having less coded data; and

a process for quantizing an orthogonal transform signal selected at said selection process.

25. A picture signal coding method, being supplied with an input picture signal and a transparency signal expressing a synthesis ratio at synthesizing said input picture signal and the other picture signals and coding a digital picture signal at every block, and is characterized by including:

a step for orthogonally transforming said input picture signal and outputting an orthogonal transform signal;

a step for deriving a normalization coefficient normalizing said orthogonal transform signal from said transparency signal; and

a step for quantizing said orthogonal transform signal by a quantization step multiplied by said AC normalization coefficient.

26. A picture signal decoding method, being supplied with a coded signal normalizing an orthogonal transform output signal of an input signal by a transparency signal expressing a synthesis ratio at synthesis of an input picture signal and the other picture signals and said transparency signal and decoding said coded signal, and is characterized by including:

a step for decoding said coded signal and outputting the decoded signal;

a step for deriving a normalization coefficient normalizing each component of said decoded signals from said transparency signal;

a step for dequantizing said decoded signal by a quantization step multiplied by said normalization coefficient and outputting the dequantized value; and

a step for orthogonally transforming said dequantized value and outputting a picture decoded signal.

**27.** A picture signal transmission system comprising:

a picture signal coding apparatus for multiplying the quantization step by a DC normalization coefficient derived from an effective pixel indication signal indicating a partial picture to be coded for a DC component and quantizing by a standard quantization step for a non DC component in an orthogonal transform signal obtained by orthogonal transformation of an input picture signal;
a picture signal decoding apparatus, being supplied with a coded signal coded at said picture signal coding apparatus and said effective pixel indication signal, and decoding said coded signal; and
wireless or wired communication means connecting said picture signal coding apparatus and said picture signal decoding apparatus.

**28.** A picture signal transmission system comprising:

a picture signal coding apparatus quantizing a DC differential component which is a difference between a DC component of an orthogonal transform signal obtained by orthogonal transformation of an input picture signal and a DC component obtained by multiplying a DC component of a reference block by a DC normalization coefficient derived by using an effective pixel indication signal indicating a partial picture to be coded and an AC component of said orthogonal transform signal;
a picture signal decoding apparatus, being supplied with a coded signal coded at said picture signal coding apparatus, said effective pixel indication signal and a DC component of said reference block, and decoding said coded signal; and
wireless or wired communication means connecting said picture signal coding apparatus and said picture signal decoding apparatus.

**29.** A picture signal transmission system comprising:

a picture signal coding apparatus for quantizing by a quantization step multiplied by an AC normalization coefficient derived by using an effective picture indication signal indicating a partial picture to be coded for an AC component of an orthogonal transfer signal obtained by orthogonally transformed from an input picture signal;
a picture signal decoding apparatus, being supplied with a coded signal coded at said picture signal coding apparatus and said effective pixel indication signal, and decoding said coded signal; and
wireless or wired communication means connecting said picture signal coding apparatus and said picture signal decoding apparatus.

**30.** A picture signal transmission system comprising:

a picture signal coding apparatus for quantizing by a quantization step multiplied by a normalization coefficient derived from a transparency signal expressing a synthesis ratio at synthesis of said input picture signal and the other picture signals;
a picture signal decoding apparatus, being supplied with a coded signal coded at said picture signal coding apparatus and said effective pixel indication signal, and decoding said coded signal; and
wireless or wired communication means connecting said picture signal coding apparatus and said picture signal decoding apparatus.

EP 0 843 481 A1

Effective pixel
indication signal  1 →

┌─────────────────┐   3         ┌──────────────────┐  10        ┌──────────────┐  12
│ Effective pixel  │            │ DC normalization  │           │ Weighting     │
│ detection means  │ → 5        │ coefficient       │ → 11      │ calculation   │
│                  │            │ calculation means │           │ means         │
└─────────────────┘            └──────────────────┘           └──────────────┘
        │ 4                                                           │
        ↓                                                             │
┌─────────────────┐   6                                              │ 13
│ Orthogonal       │                                                 │
│ transform base   │                                                 │
│ signal           │                                                 │
│ generation means │                                                 │
└─────────────────┘                                                 │
        │ 7                                                           ↓
        ↓                                                    ┌──────────────┐  15       ┌──────────────┐  17
┌─────────────────┐   8                              ┌─────→│ Quantization  │ → 16     │ Variable length│ → 18
│ Two dimensional  │                          9      │      │ means         │          │ coding means   │
Picture signal 2 →│ orthogonal       │ ─────────────┘      └──────────────┘          └──────────────┘
│ transform means  │                                          ↑
└─────────────────┘                                           │

                                                     14  Quantization
                                                         parameter

FIG. 1

Effective pixel indication signal 1

Effective pixel detection means 3

DC normalization coefficient calculation means 10

Weighting calculation means 12

Orthogonal transform base signal generation means

Two dimensional orthogonal transform means

Dequantization means

Variable length decoding means 20

Coded signal 18

4

6

7

24

25

23

22

14

21

13

11

5

FIG. 2

FIG. 3

Effective pixel detection means 3

DC normalization coefficient calculation means 10

Weighting calculation means 12

30

31

32

DC prediction coding means 33

Orthogonal transform base signal generation means 6

Two dimensional orthogonal transform means 8

Synthesizing means 9 35

34

36

Quantization means 15

14

Variable length coding means 17

18

16

1 5 11 13

4 7 2

22

FIG. 4

FIG. 5

EP 0 843 481 A1

EP 0 843 481 A1

Effective pixel detection means

AC normalization coefficient calculation means

Weighting calculation means

Orthogonal transform base signal generation means

Variable length decoding means

Dequantization means

Two dimensional orthogonal transform means

**FIG. 6**

EP 0 843 481 A1

FIG. 7

FIG. 8

EP 0 843 481 A1

FIG. 9

## INTERNATIONAL SEARCH REPORT

| International application No. |
| --- |
| PCT/JP96/02175 |

### A. CLASSIFICATION OF SUBJECT MATTER

Int. Cl$^6$  H04N7/24

According to International Patent Classification (IPC) or to both national classification and IPC

### B. FIELDS SEARCHED

Minimum documentation searched (classification system followed by classification symbols)

Int. Cl$^6$  H04N7/24-H04N7/68

Documentation searched other than minimum documentation to the extent that such documents are included in the fields searched

Jitsuyo Shinan Koho                1926 - 1996
Kokai Jitsuyo Shinan Koho          1971 - 1996

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP, 5-113278, A (Oki Electric Industry Co., Ltd.), April 22, 1994 (22. 04. 94), Fig. 1 (Family: none) | 1 - 30 |
| A | JP, 6-110868, A (Oki Electric Industry Co., Ltd.), April 30, 1993 (30. 04. 93), Fig. 1 (Family: none) | 1 - 30 |

☐ Further documents are listed in the continuation of Box C.   ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| October 7, 1996 (07. 10. 96) | October 15, 1996 (15. 10. 96) |

| Name and mailing address of the ISA/ | Authorized officer |
| --- | --- |
| Japanese Patent Office | |
| Facsimile No. | Telephone No. |

Form PCT/ISA/210 (second sheet) (July 1992)